# EUROPÄISCHE PATENTSCHRIFT

(11) **EP 0 805 841 B1**
(45) Veröffentlichungstag und Bekanntmachung des Hinweises auf die Patenterteilung: **02.06.1999**
(21) Anmeldenummer: 96900593.3
(22) Anmeldetag: 18.01.1996
(51) Int. Cl.: C09J 109/00, C09J 119/00, C09J 11/08

(54) **STRUKTURELLE ROHBAUKLEBSTOFFE AUF KAUTSCHUKBASIS**
RUBBER-BASED ADHESIVES USED ON RAW STRUCTURES
ADHESIFS POUR STRUCTURES BRUTES, A BASE DE CAOUTCHOUC

(30) Priorität: 26.01.1995 DE 19502381
(43) Veröffentlichungstag der Anmeldung: 12.11.1997
(73) Patentinhaber: Henkel Teroson GmbH, 69123 Heidelberg (DE)
(72) Erfinder: BORN, Peter, D-69207 Sandhausen (DE); DITTRICH, Frank, D-74889 Sinsheim (DE)
(74) Vertreter: Mathes, Nikolaus, Dr.
(86) Internationale Anmeldenummer: EP9600194
(87) Internationale Veröffentlichungsnummer: WO9623040

(56) Entgegenhaltungen:
- EP-A- 0 441 244
- EP-A- 0 524 058
- US-A- 4 900 771

## Beschreibung

Die Erfindung betrifft einkomponentige hitzehärtende Zusammensetzungen auf Basis von flüssigen Kautschuken und feinteiligen pulverförmigen thermoplastischen Polymeren sowie deren Herstellung und Verwendung als Strukturklebstoffe mit einer Bruchdehnung von mehr als 15 %.

Bei den modernen Fertigungsmethoden zum Verbinden von metallischen Komponenten im Maschinen-, Fahrzeug- oder Gerätebau, insbesondere im Automobilbau, werden die klassischen Befestigungsmethoden, wie Nieten, Schrauben oder Schweißen immer häufiger durch das Kleben ersetzt. Insbesondere das Punktschweißen als Quelle zukünftiger Korrosion wird dabei so weit wie möglich zurückgedrängt bzw. in Kombination mit Strukturklebstoffen angewendet. Aus diesem Grunde besteht ein verstärkter Bedarf an hochfesten Strukturklebstoffen. Aus fertigungstechnischen Gründen müssen diese Klebstoffe in der Automobilfertigung im sogenannten Rohbau eingesetzt werden, d.h., diese Klebstoffe werden im allgemeinen auf die ungereinigte Metalloberfläche appliziert. Diese Oberflächen sind häufig mit den verschiedensten Korrosionsschutz- bzw. Ziehölen beschichtet, so daß die dort eingesetzten Klebstoffe durch diese Öle nicht in ihrer Funktion beeinträchtigt werden dürfen. Weiterhin müssen diese Klebstoffe vorzugsweise ohne Vorgelierung beständig gegen die diversen Wäscher-Bäder und -Anlagen sein sowie den hohen Temperaturen bis zu etwa 240° der Einbrennöfen für die Elektrotauchlakkierung schadlos widerstehen und in diesem Temperaturbereich aushärten. Weiterhin müssen diese Klebstoffe gute alterungsbeständige Haftung auf den diversen verzinkten Stählen wie z.B. elektrolytisch verzinkten, feuerverzinkten sowie den entsprechenden thermisch nachbehandelten Verzinkungen oder verzinkten und nachträglich phosphatierten Stahlblechen haben. Strukturklebstoffe für diese Anwendungen müssen weiterhin eine Mindestfestigkeit von etwa 15 MPa haben. Aus Gründen des einfachen Arbeitsablaufes kommen nur einkomponentige Materialien in Frage, die durch Pumpen gefördert werden können und maschinell applizierbar sind.

Wegen der hohen Festigkeitsanforderungen wurden in der Vergangenheit für diese Anwendungen ganz überwiegend einkomponentige hitzehärtende Epoxyklebstoffe eingesetzt. Neben den Vorteilen einer hohen Zugfestigkeit haben die Epoxyklebstoffe jedoch eine Reihe von entscheidenden Nachteilen. Die pastösen, hitzehärtenden einkomponentigen Epoxyklebstoffe besitzen keine ausreichende Auswaschbetändigkeit in den Wäscher- und Phosphatierbädern, so daß diese Verklebungen üblicherweise durch Induktionsheizungen oder spezielle Öfen vorgeliert werden müssen. Dies bedeutet jedoch einen zusätzlichen Arbeitsschritt. Man hat dies zu umgehen versucht, indem man einkomponentige hitzehärtende Epoxyklebstoffe mit Hotmelt-Charakter entwickelt hat, diese erfordern jedoch spezielle Auftragsanlagen, da diese Klebstoffe heiß appliziert werden müssen. Ein weiterer genereller Nachteil von Epoxyklebstoffen ist ihre Tendenz unter dem Einfluß hoher Luftfeuchtigkeit Wasser aufzunehmen, was zu Korrosionserscheinungen und Schwächung der Haftung in der Klebefuge führen kann. Epoxyklebstoffe zeichnen sich zwar durch eine hohe Zugfestigkeit aus, ihre Bruchdehnung ist jedoch in der Regel sehr gering, selbst die durch Kautschuk-Zusatz flexibilisierten Epoxyklebstoffe haben nur eine Bruchdehnung von unter 5%. Außerdem ist der Einsatz der Epoxyklebstoffe auf Basis von niedermolekularen Epoxyverbindungen (Molekulargewicht <700) aus arbeitshygienischen Gründen unerwünscht, da diese niedermolekularen Epoxyverbindungen bei Hautkontakt allergische bzw. sensibilierende Reaktionen auslösen können.

Als Alternative werden seit geraumer Zeit Zusammensetzungen auf der Basis von vulkanisierbaren Kautschuken eingesetzt. Die EP-B-97394 beschreibt eine Klebstoffmischung auf der Basis eines flüssigen Polybutadienkautschukes, pulverförmigem Schwefel, organischen Beschleunigern und gegebenenfalls festem Kautschuk. B.D. Ludbrook, Int. J. Adhesion and Adhesives Vol. 4, No.4, S. 148-150, gibt an, daß derartige auf flüssigen Polybutadienen basierende Klebstoffe durch entsprechende Auswahl der Menge an Schwefel und Beschleunigern Festigkeitswerte erreichen können, die denen von flexibilisierten Epoxyklebstoffen gleichwertig sind. Während diese Formulierungen gute Härtungseigenschaften und gute Alterungsbeständigkeit haben und auch auf normalem geölten Stahlblech einigermaßen brauchbare Haftung zeigen, ist ihre Einsetzbarkeit für die diversen verzinkten Stahlbleche unbefriedigend, außerdem ist die Bruchdehnung dieser hochfesten Kautschukklebstoffe sehr gering.

Zur Verbesserung der Haftung schlägt die DE-C-3834818 vor, für den flüssigen Kautschuk OH-terminierte Polybutadiene einzusetzen. Gemäß EP-B-441244 können als funktionelles Kautschukpolymer neben hydroxyfunktionellen Homo- oder Copolymeren auch solche mit Thiol-, Amino-, Amido-, Carboxyl-, Epoxy-, Isocyanat-, Anhydrid- oder Acetoxy-Gruppen eingesetzt werden, wobei jedoch die ausgehärtete Klebstoffmischung eine Bruchdehnung aufweist, die 15 % nicht übersteigt.

Gemäß EP-B-309903 bzw. DE-C-4027064 können den Klebstoffmischungen auf Basis von flüssigen Kautschuken polyfunktionelle Epoxyverbindungen zugesetzt werden, um die Haftung zu verbessern bzw. die Zugscherfestigkeit zu verbessern. Abgesehen davon, daß es aus den oben erwähnten Gründen unerwünscht ist, Epoxidharz-haltige Klebstoff zusammensetzungen einzusetzen, sind die in den beiden letztgenannten Schriften beschriebenen Klebstoff zusammensetzungen nicht als Strukturklebstoffe geeignet, da sie nur ein sehr niedriges Festigkeitsniveau von maximal 3 MPa erreichen.

Der vorliegenden Erfindung lag deshalb die Aufgabe zugrunde, Kleb- und Dichtstoffe bereitzustellen, die vorzugsweise zum Verbinden von Metallteilen im Automobil-Rohbau eingesetzt werden können, und die
- auf einer Vielzahl der heute eingesetzten Metalloberflächen ohne Reinigungsvorbehandlung eine ausreichende dauerhafte Haftung haben
- als Strukturklebstoffe eingesetzt werden können, Strukturklebstoffe im Sinne dieser Erfindung sind solche Klebstoffe, die im Zugscherversuch mindestens eine Festigkeit von 15 MPa erzielen
- die Reißdehnung gemäß DIN 53504 soll > als 15 %, vorzugsweise > als 20 % sein
- die Materialien sollen einkomponentig, hitzehärtend sein und in einem Temperaturbereich von 160°C bis 240°C aushärten, dabei sollen die Festigkeitseigenschaften nicht signifikant durch die Härtungstemperatur beeinflußt werden.

Zu den Substraten, auf denen Haftung erzielt werden muß, gehören neben den geölten normalen Stahlblechen insbesondere die diversen verzinkten und geölten Stahlbleche sowie Aluminium.

Gemäß B.D. Ludbrook, Loc.cit., lassen sich die Festigkeitswerte von kautschukvulkanisierten Klebstoffen durch die Menge an Schwefel und Beschleuniger signifikant erhöhen, dies geht jedoch immer zu Lasten der Reißdehnung. Es wurde jetzt überraschend gefunden, daß der Zusatz von feinteiligen Pulvern aus thermoplastischen Polymeren zu Klebstoffen auf der Basis von flüssigen Kautschuken nicht nur die Zugscherfestigkeit erhöht, sondern auch die Reißdehnung signifikant verbessert. Da die übrigen Eigenschaften, wie z.B. Alterungsbeständigkeit und Haftverhalten auf den oben genannten Substraten durch den Zusatz des thermoplastischen Polymerpulvers nicht beeinträchtigt werden, wird die Einsetzbarkeit derartiger Klebstoffe sehr viel universeller. So können erstmals auch dort Strukturklebstoffe eingesetzt werden, wo bisher aufgrund der notwendigen hohen Dehnfähigkeit nur Klebstoffe niederen Festigkeitsniveaus eingesetzt werden konnten, beispielhaft genannt seien hier Unterfütterungsklebstoffe für die Verklebung von Innen- mit Außenblechen im Automobilbau, wenn aus konstruktiven Gründen hohe Verwindungssteifigkeit gefordert ist.

Die erfindungsgemäßen Kleb-/Dichtstoffzusammensetzungen enthalten mindestens einen der folgenden Stoffe:
- einen oder mehrere Flüssigkautschuke und/oder Festkautschuke oder Elastomere
- feinteilige Pulver aus thermoplastischen Polymeren
- Vulkanisationsmittel, Vulkanisationsbeschleuniger, Katalysatoren
- Füllstoffe
- Klebrigmacher und/oder Haftvermittler
- Extenderöle
- Alterungsschutzmittel
- Rheologiehilfsmittel.

Flüssigkautschuke oder Elastomere können dabei aus der folgenden Gruppe der Homo- und/oder Copolymeren ausgewählt werden:

Polybutadiene, insbesondere die 1,4- und 1,2-Polybutadiene, Polybutene, Polyisobutylene, 1,4- und 3,4-Polyisoprene, Styrol-Butadien-Copolymere, Butadien-Acrylnitril-Copolymere, wobei diese Polymeren endständige und/oder (statistisch verteilte) seitenständige funktionelle Gruppen haben können. Beispiele für derartige funktionelle Gruppen sind Hydroxy-, Amino-, Carboxyl-, Carbonsäureanhydrid- oder Epoxygruppen. Das Molekulargewicht dieser Flüssigkautschuke ist typischerweise unterhalb von 20000, vorzugsweise zwischen 900 und 10000. Der Anteil an Flüssigkautschuk an der Gesamtzusammensetzung hängt dabei von der erwünschten Rheologie der ungehärteten Zusammensetzung und den erwünschten mechanischen Eigenschaften der ausgehärteten Zusammensetzung ab. Der Anteil an flüssigem Kautschuk oder Elastomer variiert normalerweise zwischen 5 und 50 Gew.% der Gesamtformulierung. Dabei hat es sich als zweckmäßig erwiesen, vorzugsweise Mischungen von Flüssigkautschuken unterschiedlicher Molekulargewichte und unterschiedlicher Konfiguration in bezug auf die restlichen Doppelbindungen einzusetzen. Zur Erzielung optimaler Haftung auf den diversen Substraten wird in den besonders bevorzugten Formulierungen anteilig eine Flüssigkautschukkomponente mit Hydroxylgruppen bzw. Säureanhydridgruppen eingesetzt. Mindestens einer der Flüssigkautschuke sollte einen hohen Anteil an cis-1,4-Doppelbindungen, ein weiterer einen hohen Anteil an Vinyldoppelbindungen enthalten.

Geeignete Festkautschuke haben im Vergleich zu den Flüssigkautschuken ein signifikant höheres Molekulargewicht (MW=100000 oder höher), Beispiele für geeignete Kautschuke sind Polybutadien, vorzugsweise mit einem sehr hohen Anteil an cis-, 1,4-Doppelbindungen (typischerweise über 95%), Styrolbutadienkautschuk, Butadienacrylnitrilkautschuk, synthetischer oder natürlicher Isoprenkautschuk, Butylkautschuk oder Polyurethankautschuk.

Der Zusatz von feinverteilten thermoplastischen Polymerpulvern bringt eine signifikante Verbesserung der Zugscherfestigkeit unter Beibehaltung einer sehr hohen Bruchdehnung, wie sie bisher für Strukturklebstoffe ungewöhnlich war. So lassen sich Zugscherfestigkeiten von über 15 MPa erreichen, wobei die Bruchdehnung deutlich über 15 %, sehr häufig über 20 % liegt. Die bisher üblicherweise eingesetzten hochfesten Strukturklebstoffe waren auf der Basis von Epoxidharzen, die selbst als flexibilisierte Klebstofformulierungen nur Bruchdehnungen von unter 5 % aufweisen. Die Kombination von hohen Zugscherfestigkeitswerten gepaart mit hoher Reißdehnung wird auf den erfindungsgemäßen Zusatz von thermoplastischen Polymerpulvern zurückgeführt. Erfindungsgemäß eignen sich eine Vielzahl von thermoplastischen Polymerpulvern als Zusatz, beispielhaft genannt sei Vinylacetat, entweder als Homopolymer oder als Copolymer mit Ethylen so wie anderen Olefinen und Acrylsäurederivaten, Polyvinylchlorid, Vinylchlorid-/Vinylacetat-Copolymere, Styrolcopolymere, wie sie z.B. in der DE-A-4034725 beschrieben sind, Polymethylmethacrylat sowie dessen Copolymeren mit anderen (Meth)acrylsäureestern und funktionellen Comonomeren, wie sie beispielsweise in der DE-C-2454235 beschrieben sind, oder Polyvinylacetale wie z.B. das Polyvinylbutyral. Obwohl die Teilchengröße bzw. Teilchengrößenverteilung der Polymerpulver nicht besonders kritisch zu sein scheint, sollte die mittlere Teilchengröße unter 1mm, vorzugsweise unter 350µm, ganz besonders bevorzugt zwischen 100 und 20µm liegen. Ganz besonders bevorzugt werden Polyvinylacetat bzw. Copolymere auf Basis Ethylenvinylacetat (EVA). Die Menge des zugesetzten thermoplastischen Polymerpulvers richtet sich nach dem gewünschten Festigkeitsbereich, sie liegt zwischen 2 und 20 Gew.% bezogen auf die Gesamtzusammensetzung, ein besonders bevorzugter Bereich sind 10 bis 15%.

Da die Vernetzungs- bzw. Härtungsreaktion der Kautschukzusammensetzung einen entscheidenden Einfluß auf die Zugscherfestigkeit und auf die Reißdehnung der ausgehärteten Klebstoff-Zusammensetzung hat, muß das Vulkanisationssystem besonders sorgfältig ausgewählt und abgestimmt werden. Es eignen sich eine Vielzahl von Vulkanisationssystemen sowohl auf der Basis von elementarem Schwefel als auch Vulkanisationssysteme ohne freien Schwefel. Zu letzterem zählen die Vulkanisationssysteme auf der Basis zu Thiuramdisulfiden, organischen Peroxiden, polyfunktionellen Aminen, Chinonen, p-Benzochinondioxim, p-Nitrosobenzol und Dinitrosobenzol oder auch die Vernetzung mit (blockierten) Diisocyanaten. Ganz besonders bevorzugt sind Vulkanisationssysteme auf der Basis von elementarem Schwefel und organischen Vulkanisationsbeschleunigern sowie Zinkverbindungen. Der pulverförmige Schwefel wird dabei in Mengen von 4 bis 15 Gew.%, bezogen auf die Gesamtzusammensetzung eingesetzt, besonders bevorzugt werden Mengen zwischen 6 und 8 % eingesetzt. Als organische Beschleuniger eignen sich die Dithiocarbamate (in Form ihrer Ammonium- bzw. Metallsalze), Xanthogenate, Thiuram-Verbindungen (Monosulfide und Disulfide), Thiazolverbindungen, Aldehyd/Aminbeschleuniger (z.B. Hexamethylentetramin) sowie Guanidinbeschleuniger, ganz besonders bevorzugt wird Dibenzothiazyldisulfid (MBTS). Diese organischen Beschleuniger werden in Mengen zwischen 2 und 8 Gew.% bezogen auf die Gesamtformulierung, bevorzugt zwischen 3 und 6 % eingesetzt. Bei den als Beschleuniger wirkenden Zinkverbindungen kann zwischen den Zinksalzen von Fettsäuren, Zinkdithiocarbamaten, basischen Zinkcarbonaten sowie insbesondere feinteiligem Zinkoxid gewählt werden. Der Gehalt an Zinkverbindungen liegt im Bereich zwischen 1 und 10 Gew.%, vorzugsweise zwischen 3 und 7 Gew.%. Zusätzlich können weitere typische Kautschukvulkanisationshilfsmittel wie z.B. Fettsäuren (z.B. Stearinsäure) in der Formulierung vorhanden sein.

Obwohl die erfindungsgemäßen Zusammensetzungen aufgrund des Gehaltes an Flüssigkautschuk mit funktionellen Gruppen in aller Regel bereits eine sehr gute Haftung auf den zu verklebenden Substraten haben, können, falls erforderlich, Klebrigmacher und/oder Haftvermittler zugesetzt werden. Hierzu eignen sich beispielsweise Kohlenwasserstoffharze, Phenolharze, Terpen-Phenolharze, Resorcinharze oder deren Derivate, modifizierte oder unmodifizierte Harzsäuren bzw.-ester (Abietinsäurederivate), Polyamine, Polyaminoamide, Anhydride und Anhydrid-enthaltende Copolymere. Auch der Zusatz von Polyepoxidharzen in geringen Mengen (<1 Gew.%) kann bei manchen Substraten die Haftung verbessern. Hierfür werden dann jedoch vorzugsweise die festen Epoxidharze mit einem Molekulargewicht deutlich über 700 in feingemahlener Form eingesetzt, so daß die Formulierungen trotzdem im wesentlichen frei von Epoxyharzen sind, insbesondere solchen mit einem Molekulargewicht unter 700. Falls Klebrigmacher bzw. Haftvermittler eingesetzt werden, hängt deren Art und Menge von der Polymerzusammensetzung des Kleb-/ Dichtstoffes, von der gewünschten Festigkeit der gehärteten Zusammensetzung und von dem Substrat, auf welches die Zusammensetzung appliziert wird, ab. Typische klebrigmachende Harze (Tackifier) wie z.B. die Terpenphenolharze oder Harzsäurederivate, werden normalerweise in Konzentrationen zwischen 5 und 20 Gew.% verwendet, typische Haftvermittler wie Polyamine, Polyaminoamide oder Resorcinderivate werden im Bereich zwischen 0,1 und 10 Gew.% verwendet.

Vorzugsweise sind die erfindungsgemäßen Zusammensetzungen frei von Weichmachern für das thermoplastische Polymer. Insbesondere sind sie frei von Phthalsäureestern. Es kann jedoch notwendig sein, die Rheologie der ungehärteten Zusammensetzung und/oder den mechanischen Eigenschaften der gehärteten Zusammensetzung durch die Zugabe von sogenannten Extenderölen, d.h. aliphatischen, aromatischen oder naphtenischen Ölen, zu beeinflussen. Vorzugsweise geschieht diese Beeinflussung jedoch durch die zweckmäßige Auswahl der niedrigmolekularen Flüssigkautschuke oder durch die Mitverwendung von niedermolekularen Polybutenen oder Polyisobutylenen. Falls Extenderöle eingesetzt werden, werden Mengen im Bereich zwischen 2 und 15 Gew.% verwendet.

Die Füllstoffe können aus einer Vielzahl von Materialien ausgewertet werden, insbesondere sind hier zu nennen Kreiden, natürliche gemahlene oder gefällte Calcium-carbonate, Calcium-Magnesium-Carbonate, Silicate, Schwerspat sowie Ruß. Auch blättchenförmige Füllstoffe, wie z.B. Vermiculit, Glimmer, Talk oder ähnliche Schichtsilikate, sind als Füllstoffe geeignet. Es kann ggf. zweckmäßig sein, daß zumindest ein Teil der Füllstoffe oberflächenvorbehandelt ist, insbesondere hat sich bei den verschiedenen Calciumcarbonaten bzw. Kreiden eine Beschichtung mit Stearinsäure zur Verminderung der eingetragenen Feuchtigkeit und zur Verminderung der Feuchtigkeitsempfindlichkeit der ausgehärteten Zusammensetzung als zweckmäßig erwiesen. Zusätzlich enthalten die erfindungsgemäßen Zusammensetzungen in der Regel zwischen 1 und 5 Gew.% Calciumoxid. Der Gesamtanteil an Füllstoffen in der Formulierung kann zwischen 10 und 70 Gew.% variieren, der Vorzugsbereich liegt zwischen 25 und 60 Gew.%.

Gegen den thermischen, thermooxidativen oder Ozonabbau der erfindungsgemäßen Zusammensetzungen können konventionelle Stabilisatoren, wie z.B. sterische gehinderte Phenole oder Aminderivate eingesetzt werden, typische Mengenbereiche für diese Stabilisatoren sind 0,1 bis 5 Gew.%.

Obwohl die Rheologie der erfindungsgemäßen Zusammensetzungen normalerweise durch die Auswahl der Füllstoffe und das Mengenverhältnis der niedermolekularen FlüssigKautschuke in den gewünschten Bereich gebracht werden kann, können konventionelle Rheologiehilfsmittel wie z.B. pyrogene Kieselsäuren, Bentone oder fibrilierte oder Pulpkurzfasern im Bereich zwischen 0,1 und 7 % zugesetzt werden. Außerdem können weitere konventionelle Hilfs- und Zusatzmittel in den erfindungsgemäßen Zusammensetzungen Verwendung finden.

Wie eingangs erwähnt, ist ein bevorzugtes Anwendungsfeld für die erfindungsgemäßen einkomponentigen hitzehärtenden Kleb-/Dichtstoff-Zusammensetzungen der Rohbau in der Automobilindustrie, so daß die Härtung der Zusammensetzungen in einem Temperaturbereich zwischen 80 und 240°C in 10 bis 35 Min. stattfinden soll, vorzugsweise finden im Rohbau Temperaturen zwischen 160° und 200°C Verwendung. Ein entscheidender Vorteil der erfindungsgemäßen Zusammensetzungen gegenüber den pastösen einkomponentigen Epoxyharz-Klebstoffen gemäß Stand der Technik ist ihre sog. "Wäscherbeständigkeit" unmittelbar nach dem Auftrag der Klebstoffe, d.h., sie bedürfen keiner Vorgelierung wie die vorgenannten Epoxyklebstoffe, um in den diversen Wasch- und Phosphatierungsbädern des Rohbaus beständig zu sein. Gegenüber den Hotmelt-Epoxy-Klebstoffen haben die erfindungsgemäßen Zusammensetzungen den Vorteil, daß sie zum Verpumpen bzw. zur Applikation nur geringfügig auf ca. 30 bis 45°C erwärmt werden müssen, außerdem ist ihr Benetzungsvermögen für kalte Substrate, auch aufgrund ihrer höheren Eigenklebrigkeit, erheblich besser als das von Epoxy-Hotmelts.

In den nachfolgenden Ausführungsbeispielen soll die Erfindung näher erläutert werden, wobei die Auswahl keine Beschränkung des Umfanges des Erfindungsgegenstandes darstellen soll.

Für die Zugscherfestigkeitsbestimmung wurden dabei Stahlblechstreifen aus einem Stahl 14 O5, 1,5 mm dick, 25 x 100 mm mit den Klebstoffen verklebt, wobei die Überlappung 25 x 20 mm und die Schichtdicke der Verklebung 0,2 mm betrug. Die Stahlstreifen wurden dabei vorher mit ASTM-Öl Nr. 1 mit einem Belaggewicht von 3 bis 4 g/m² eingeölt. Die Reißdehnung und Reißfestigkeit wurden an einem S2 Prüfkörper gemäß DIN 53504, Schichtdicke 2 mm, durchgeführt. Für beide Zugversuche wurde eine herkömmliche Labor zugprüfmaschine verwendet, Vorschubgeschwindigkeit 50 mm/min. Die Aushärtung der Klebstoffe erfolgte dabei in einem Labor-Umluftofen, Härtungszeit: 30 Min. bei 180°C.

In einem evakuierbaren Laborkneter wurden die in den nachfolgenden Tabellen aufgeführten Zusammensetzungen unter Vakuum so lange gemischt, bis sie homogen waren. Falls nicht anders angegeben, sind alle Teile in den Beispielen Gewichtsteile.

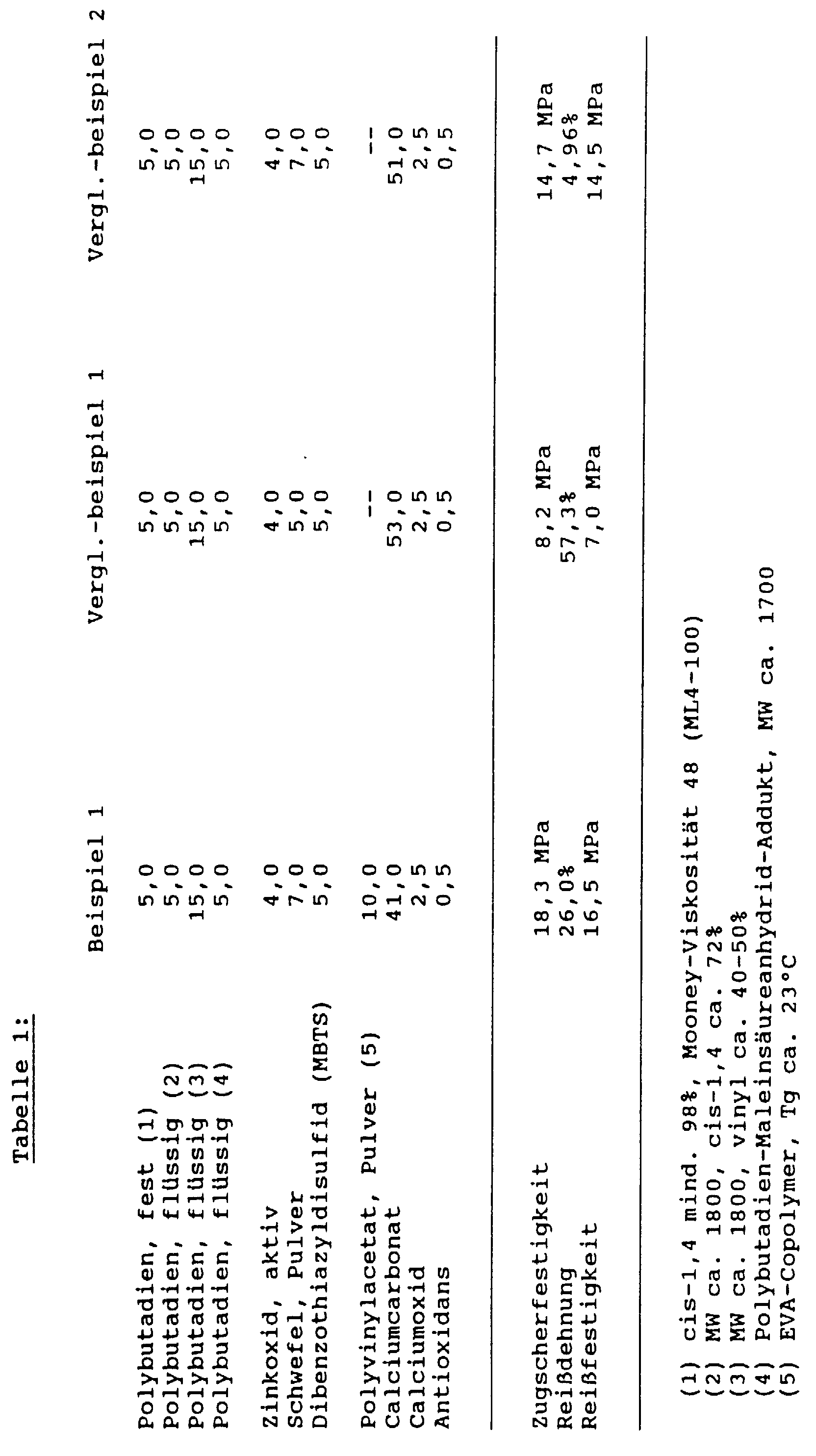

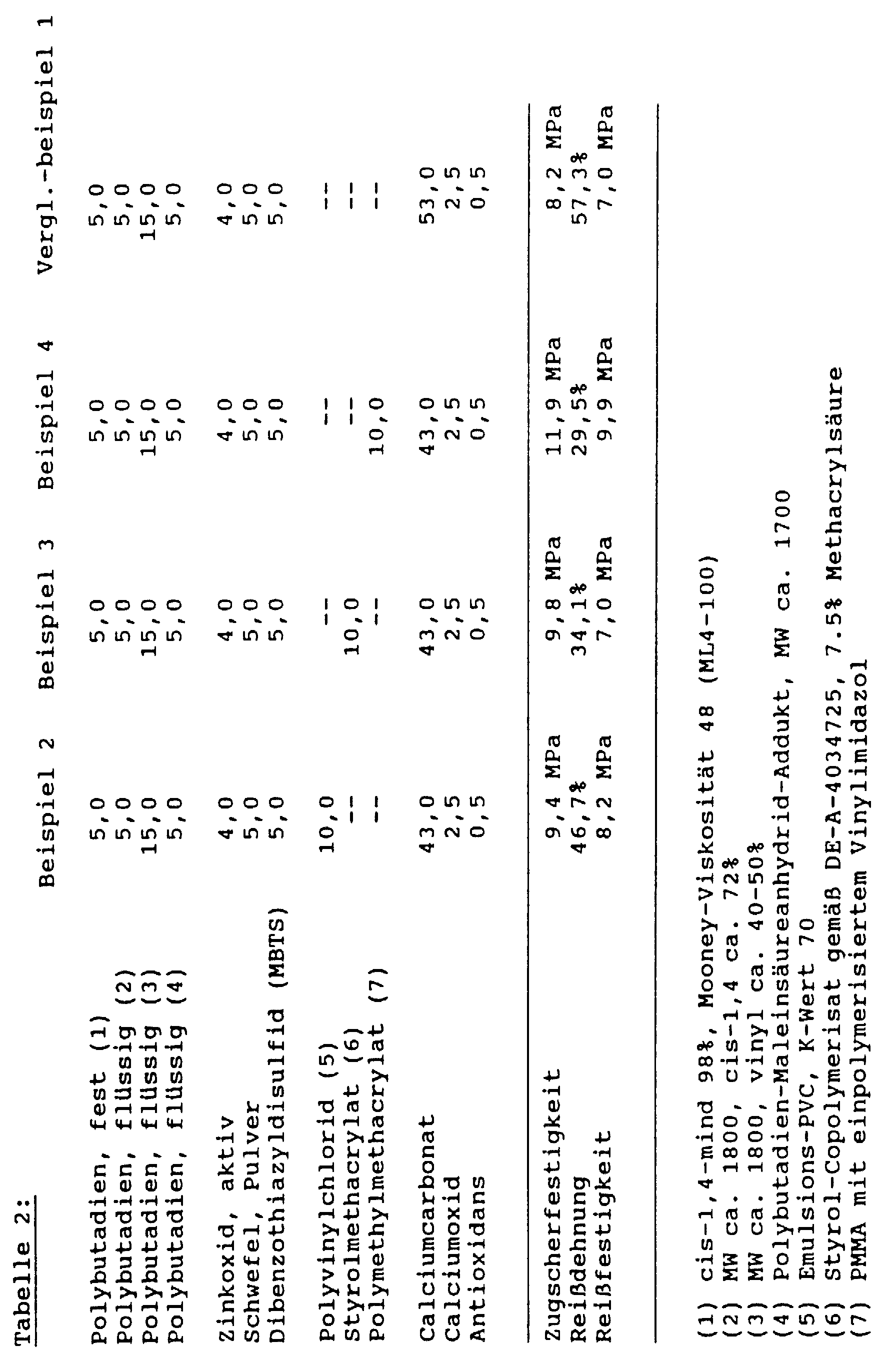

Im Zugscherfestigkeitsversuch wurde bei allen Prüfkörpern kohäsiver Bruch beobachtet.

Für das Haftverhalten auf verzinkten Stählen standen nur die in der Automobilindustrie üblicherweise verwendeten Blechstärken von 0,8 mm zur Verfügung. Hochfeste StrukturKlebstoffe der vorliegenden Beispiele kommen aber bereits in den Festigkeitsbereich dieser dünnen Stahlbleche, so daß das Haftverhalten auf diesen Substraten nur durch einen qualitativen Schältest beurteilt werden konnte. Die Stahlbleche wurden dabei analog mit ASTM-Öl Nr. 1 eingeölt, mit dem Klebstoff beschichtet, wie oben beschrieben eingebrannt und anschließend in einem manuellen Schälversuch beurteilt. Die folgenden Substrate wurden geprüft: Elektrolytisch verzinkt, feuerverzinkt, verzinkt und phosphatiert, sowie thermisch nachbehandelte Verzinkungen (galvannealed). In allen Fällen wurde kohäsives Bruchverhalten beobachtet.

Wie aus einem Vergleich des Vergleichsbeispiels 1 mit dem Vergleichsbeispiel 2 ersichtlich ist, läßt sich die Zugscherfestigkeit bzw. Reißfestigkeit der kautschukbasierenden Klebstoffe gemäß Stand der Technik alleine durch einen höheren Gehalt an Schwefel signifikant erhöhen, die Reißdehnung erniedrigt sich jedoch drastisch. Bei der erfindungsgemäßen Zugabe von Polyvinylacetat-Copolymer (Beispiel 1) wird die Zugscherfestigkeit noch einmal signifikant erhöht, gleichzeitig bleibt die Reißdehnung jedoch auf einem hohen Niveau (26%) erhalten. Wie ein Vergleich des Vergleichsbeispiels 1 (ohne Thermoplastzusatz) mit den Beispielen 2 bis 4 zeigt, läßt sich durch diesen Zusatz auch bei niedrigem Gehalt an Schwefel durch den Zusatz der verschiedensten Thermoplast-Pulver die Zugscherfestigkeit signifikant erhöhen, wobei die Reißdehnung sich nur geringfügig erniedrigt.

## Patentansprüche

1. Einkomponentige hitzehärtende Zusammensetzung auf Basis von flüssigen Kautschuken, **dadurch gekennzeichnet**, daß sie feinteilige Pulver aus thermoplastischen Polymeren enthält und im ausgehärteten Zustand eine Bruchdehnung von mehr als 15% hat.

2. Hitzehärtende Zusammensetzung nach Anspruch 1, **dadurch gekennzeichnet**, daß sie zusätzlich mindestens einen Festkautschuk in einer Menge von 1.5 bis 9 Gew.%, vorzugsweise 4 bis 6 Gew.%, bezogen auf die Gesamtzusammensetzung, enthält.

3. Hitzehärtende Zusammensetzung nach Anspruch 1 oder 2, **dadurch gekennzeichnet**, daß sie im wesentlichen frei von Epoxidharzen ist.

4. Hitzehärtende Zusammensetzung nach mindestens einem der vorhergehenden Ansprüche, **dadurch gekennzeichnet**, daß zur Härtung ein Vulkanisationssystem aus Schwefel, organischen Vulkanisationsbeschleunigern und Zinkverbindungen verwendet wird.

5. Hitzehärtende Zusammensetzung gemäß Anspruch 3, **dadurch gekennzeichnet**, daß das Vulkanisationssystem aus 4 Gew.% bis 15 Gew.%, vorzugsweise 5 Gew.% bis 10 Gew.% pulverförmigem Schwefel, 2 Gew.% bis 8 Gew.%, vorzugsweise 3 Gew.% bis 6 Gew.% organischem Beschleuniger und 1 Gew.% bis 8 Gew.%, vorzugsweise 2 Gew.% bis 6 Gew.% Zinkverbindungen, vorzugsweise Zinkoxid besteht, wobei die Gew.% auf die Gesamtzusammensetzung bezogen sind.

6. Hitzehärtende Zusammensetzung nach mindestens einem der vorhergehenden Ansprüche, **dadurch gekennzeichnet**, daß das thermoplastische Polymerpulver ein Vinylacetat- Homo- oder Copolymer, ein Ethylenvinylacetat-Copolymer, ein Vinylchlorid- Homo- oder Copolymer, ein Styrol-Homo- oder Copolymer, ein (Meth)acrylat- Homo- oder Copolymer oder ein Polyvinylbutyral oder eine Mischung aus zwei oder mehreren dieser Polymeren ist und eine mittlere Korngröße von unter 1mm, vorzugsweise unter 350 µm, ganz besonders bevorzugt unter 100µm hat.

7. Hitzehärtende Zusammensetzung nach mindestens einem der vorhergehenden Ansprüche, **dadurch gekennzeichnet**, daß die Zusammensetzung frei von Weichmachern für das oder die thermoplastische(n) Polymer(en) ist.

8. Zusammensetzung nach mindestens einem der vorhergehenden Ansprüche, **dadurch gekennzeichnet**, daß sie zusätzlich Füllstoffe, Rheologiehilfsmittel, Extenderöle, Haftvermittler und/oder Alterungsschutzmittel enthält.

9. Herstellung der heißhärtenden, reaktiven Zusammensetzung nach mindestens einem der vorhergehenden Ansprüche durch Mischen der Komponenten unter hoher Scherung.

10. Verwendung von Zusammensetzungen nach mindestens einem der vorhergehenden Ansprüche als einkomponentigen hitzehärtenden Strukturklebstoff.

11. Verwendung nach Anspruch 10 für den Rohbau in der Automobilherstellung.

12. Verfahren zum Verbinden von Metallteilen und/oder Abdichten von Fugen zwischen Metallteilen, **dadurch gekennzeichnet**, daß
- zumindest eine Oberfläche eines Teils mit den Zusammensetzungen nach mindestens einem der vorhergehenden Ansprüche beschichtet wird,
- die zu verbindenden Teile zusammengefügt werden,
- und die gefügten Teile, ggf. unter mechanischer Fixierung, erhitzt werden, um die reaktive Zusammensetzung auszuhärten.

13. Verfahren zum Beschichten von Bauteilen durch Aufsprühen oder Extrudieren von Zusammensetzungen gemäß mindestens einem der Ansprüche 1 bis 8 auf die Oberfläche des Teils und Erhitzen des beschichteten Teils zum Aushärten der Zusammensetzung.

14. Verfahren zum Beschichten, Kleben und/oder Abdichten von Bauteilen, **dadurch gekennzeichnet**, daß eine extrudierte Folie, eine extrudierte Schnur oder ein extrudiertes Band, hergestellt aus einer Zusammensetzung nach mindestens einem der Ansprüche 1 bis 8, auf mindestens ein Bauteil aufgelegt wird, die Teile ggf. zusammengefügt werden und anschließend erhitzt werden, um die Zusammensetzung auszuhärten.

## Claims

1. A one-component hot-curing composition based on liquid rubbers, characterized in that it contains fine-particle powders of thermoplastic polymers and, in its cured state, has a breaking elongation of more than 15%.

2. A hot-curing composition as claimed claim 1, characterized in that it additionally contains at least one solid rubber in a quantity of 1.5 to 9% by weight and preferably in a quantity of 4 to 6% by weight, based on the composition as a whole.

3. A hot-curing composition as claimed in claim 1 or 2, characterized in that it is substantially free from epoxy resins.

4. A hot-curing composition as claimed in at least one of the preceding claims, characterized in that a vulcanization system of sulfur, organic vulcanization accelerators and zinc compounds is used for curing.

5. A hot-curing composition as claimed in claim 3, characterized in that the vulcanization system consists of 4% by weight to 15% by weight and preferably 5% by weight to 10% by weight of powder-form sulfur, 2% by weight to 8% by weight and preferably 3% by weight to 6% by weight of organic accelerator and 1% by weight to 8% by weight and preferably 2% by weight to 6% by weight of zinc compounds, preferably zinc oxide, the percentages by weight being based on the composition as a whole.

6. A hot-curing composition as claimed in at least one of the preceding claims, characterized in that the thermoplastic polymer powder is a vinyl acetate homopolymer or copolymer, an ethylene/vinyl acetate copolymer, a vinyl chloride homopolymer or copolymer, a styrene homopolymer or copolymer, a (meth)acrylate homopolymer or copolymer or a polyvinyl butyral or a mixture of two or more of these polymers and has an average particle size below 1 mm, preferably below 350 µm and, more preferably, below 100 µm.

7. A hot-curing composition as claimed in at least one of the preceding claims, characterized in that the composition is free from plasticizers for the thermoplastic polymer(s).

8. A composition as claimed in at least one of the preceding claims, characterized in that it additionally contains fillers, rheology aids, extender oils, primers and antiagers.

9. The production of the hot-curing reactive composition claimed in at least one of the preceding claims by high-shear mixing of the components.

10. The use of the compositions claimed in at least one of the preceding claims as a one-component hot-curing structural adhesive.

11. The use claimed in claim 10 for white-shell assembly in car manufacture.

12. A process for bonding metal parts and/or for sealing joints between metal parts, characterized in that
- at least one surface of one part is coated with the compositions claimed in at least one of the preceding claims,
- the parts to be joined are fitted together,
- and the fitted parts are heated, optionally after mechanical fixing, to cure the reactive composition.

13. A process for coating structural components by spraying or extruding the compositions claimed in at least one of claims 1 to 8 onto the surface of the part and heating the coated part to cure the composition.

14. A process for coating, bonding and/or sealing structural components, characterized in that an extruded film, an extruded cord or an extruded tape produced from the composition claimed in at least one of claims 1 to 8 is applied to at least one structural component, the components are optionally fitted together and then heated to cure the composition.

## Revendications

1. Composition durcissant à température élevée à un seul composant à base de caoutchoucs liquides,
caractérisée en ce qu'
elle renferme une poudre finement divisée à base de polymères thermoplastiques et qu'elle a, à l'état durci complètement, une élongation à la rupture de plus de 15 %.

2. Composition durcissant à température élevée, selon la revendication 1,
caractérisée en ce qu'
elle renferme en supplément au moins un caoutchouc solide en une quantité allant de 1,5 à 9 % en poids, de préférence de 4 à 6 % en poids, rapporté à la composition totale.

3. Composition durcissant à température élevée, selon la revendication 1 ou la revendication 2,
caractérisée en ce qu'
elle est essentiellement dépourvue de résine époxyde.

4. Composition durcissant à température élevée, selon au moins une des revendications précédentes,
caractérisée en ce qu'
on utilise pour le durcissement un système de vulcanisation à base de soufre, d'accélérateurs organiques de vulcanisation et de composés du zinc.

5. Composition durcissant à température élevée, selon la revendication 3,
caractérisée en ce que
le système de vulcanisation est formé de 4 % en poids à 15 % en poids, de préférence de 5 % en poids à 10 % en poids de soufre pulvérulent, de 2 % en poids à 8 % en poids, de préférence de 3 % en poids à 6 % en poids d'accélérateur organique et de 1 % en poids à 8 % en poids, de préférence de 2 % en poids à 6 % en poids, de composés de zinc, de préférence de l'oxyde de zinc, dans lesquels les % en poids se rapportent à la composition totale.

6. Composition durcissant à température élevée, selon au moins une des revendications précédentes,
caractérisée en ce que
la poudre de polymère thermoplastique est un homo- ou copolymère d'acétate de vinyle, un copolymère éthylène/acétate de vinyle, un homo- ou copolymère de chlorure de vinyle, un homo- ou copolymère de styrène, un homo- ou copolymère de (méth)acrylate ou un polyvinylbutyral ou un mélange de deux ou de plusieurs de ces polymères, et a une taille moyenne de grains de moins de 1 mm, de préférence en dessous de 350 µm, et d'une manière tout à fait préférée en dessous de 100 µm.

7. Composition durcissant à température élevée, selon au moins une des revendications précédentes,
caractérisée en ce que
la composition est dépourvue d'agent plastifiant pour le ou les polymères thermoplastiques.

8. Composition durcissant à température élevée, selon au moins l'une des revendications précédentes,
caractérisée en ce qu'
elle renferme en supplément des substances de charge, des adjuvants de rhéologie, des huiles de dilution, des adjuvants d'adhésion, et/ou des agents protecteurs contre le vieillissement.

9. Préparation de la composition durcissant à température élevée, réactive selon au moins une des revendications précédentes, par mélange des composants sous cisaillement élevé.

10. Utilisation des compositions selon au moins une des revendications précédentes, en tant qu'adhésif de structure durcissant à température élevée à un seul composant.

11. Utilisation selon la revendication 10 pour les structures brutes dans la fabrication automobile.

12. Procédé de mise en liaison de pièces métalliques et/ou d'étanchement de joints entre des pièces métalliques,
caractérisé en ce qu'
au moins une surface d'une pièce est enduite avec les compositions selon au moins une des revendications précédentes,
les pièces à mettre en liaison sont assemblées et les pièces jointoyées, éventuellement sous fixation mécanique, sont chauffés afin de durcir complètement la composition réactive.

13. Procédé d'enduction d'éléments de construction par pulvérisation ou extrusion des compositions conformément à au moins une des revendications 1 à 8, sur la surface de l'élément et chauffage de la pièce enduite en vue du durcissement complet de la composition.

14. Procédé d'enduction, de collage et/ou d'étanchement d'éléments de construction,
caractérisé en ce qu'
une feuille extrudée, un cordon extrudé ou une bande extrudé, fabriqué à partir d'une composition selon au moins une des revendications 1 à 8, est disposé sur au moins un élément de construction, on assemble éventuellement les pièces et ensuite on chauffe afin de durcir complètement la composition.
